# EUROPEAN PATENT SPECIFICATION

(11) **EP 1 057 113 B1**
(45) Date of publication and mention of the grant of the patent: **30.10.2002**
(21) Application number: 99908165.6
(22) Date of filing: 16.02.1999
(51) Int. Cl.: G06F 13/00

(54) **DEFERRED RECONSTRUCTION OF OBJECTS AND REMOTE LOADING FOR EVENT NOTIFICATION IN A DISTRIBUTED SYSTEM**
HINAUSGEZÖGERTE WIEDERHERSTELLUNG VON OBJEKTEN UND ENTFERNTE LADUNG FÜR DIE MITTEILUNG VON EREIGNISSEN IN EINEM VERTEILTEN SYSTEM
RECONSTITUTION DIFFEREE D'OBJETS ET TELECHARGEMENT DE NOTIFICATIONS D'EVENEMENTS DANS UN SYSTEME DECENTRALISE

(30) Priority: 26.02.1998 US 76048 P; 20.03.1998 US 44919
(43) Date of publication of application: 06.12.2000
(60) Divisional application: 02011151.4
(73) Proprietor: Sun Microsystems, Inc., Palo Alto, California 94043 (US)
(72) Inventor: JONES, Peter, C., Winchester, MA 01890 (US); WOLLRATH, Ann, M., Groton, MA 01450 (US); WALDO, James, H., Dracut, MA 01826 (US); ARNOLD, Kenneth, C., R., C., Lexington, MA 02173 (US)
(74) Representative: Collins, John David
(86) International application number: US9903224
(87) International publication number: WO99044139

(56) References cited:
- EP-A- 0 651 328
- EP-A- 0 817 022
- WO-A-98/02814
- WALDO J ET AL: "Events in an RPC based distributed system" PROCEEDINGS OF THE 1995 USENIX TECHNICAL CONFERENCE, PROCEEDINGS USENIX WINTER 1995 TECHNICAL CONFERENCE, NEW ORLEANS, LA, USA, 16-20 JAN. 1995, pages 131-142, XP002109939 1995, Berkeley, CA, USA, USENIX Assoc, USA
- RIGGS R ET AL: "Pickling state in the Java/sup TM/ system" COMPUTING SYSTEMS, FALL 1996, MIT PRESS, USA, vol. 9, no. 4, pages 291-312, XP002112719 ISSN: 0895-6340

## Description

### FIELD OF THE INVENTION

The present invention relates to a system and method for transmitting objects between machines in a distributed system and more particularly relates to deferred reconstruction of objects for event notification in a distributed system.

### BACKGROUND OF THE INVENTION

Distributed programs which concentrate on point-to-point data transmission can often be adequately and efficiently handled using special-purpose protocols for remote terminal access and file transfer. Such protocols are tailored specifically to the one program and do not provide a foundation on which to build a variety of distributed programs (e.g., distributed operating systems, electronic mail systems, computer conferencing systems, etc.).

While conventional transport services can be used as the basis for building distributed programs, these services exhibit many organizational problems, such as the use of different data types in different machines, lack of facilities for synchronization, and no provision for a simple programming paradigm.

Distributed systems usually contain a number of different types of machines interconnected by communications networks. Each machine has its own internal data types, its own address alignment rules, and its own operating system. This heterogeneity causes problems when building distributed systems. As a result, program developers must include in programs developed for such heterogeneous distributed systems the capability of dealing with ensuring that information is handled and interpreted consistently on different machines.

However, one simplification is afforded by noting that a large proportion of programs use a request and response interaction between processes where the initiator (i.e., program initiating a communication) is blocked waiting until the response is returned and is thus idle during this time. This can be modeled by a procedure call mechanism between processes. One such mechanism is referred to as the remote procedure call (RPC).

RPC is a mechanism for providing synchronized communication between two processes (e.g., program, applet, etc.) running on the same machine or different machines. In a simple case, one process, e.g., a client program, sends a message to another process, e.g., a server program. In this case, it is not necessary for the processes to be synchronized either when the message is sent or received. It is possible for the client program to transmit the message and then begin a new activity, or for the server program's environment to buffer the incoming message until the server program is ready to process a new message.

RPC, however, imposes constraints on synchronism because it closely models the local procedure call, which requires passing parameters in one direction, blocking the calling process (i.e., the client program) until the called procedure of the server program is complete, and then returning a response. RPC thus involves two message transfers, and the synchronization of the two processes for the duration of the call.

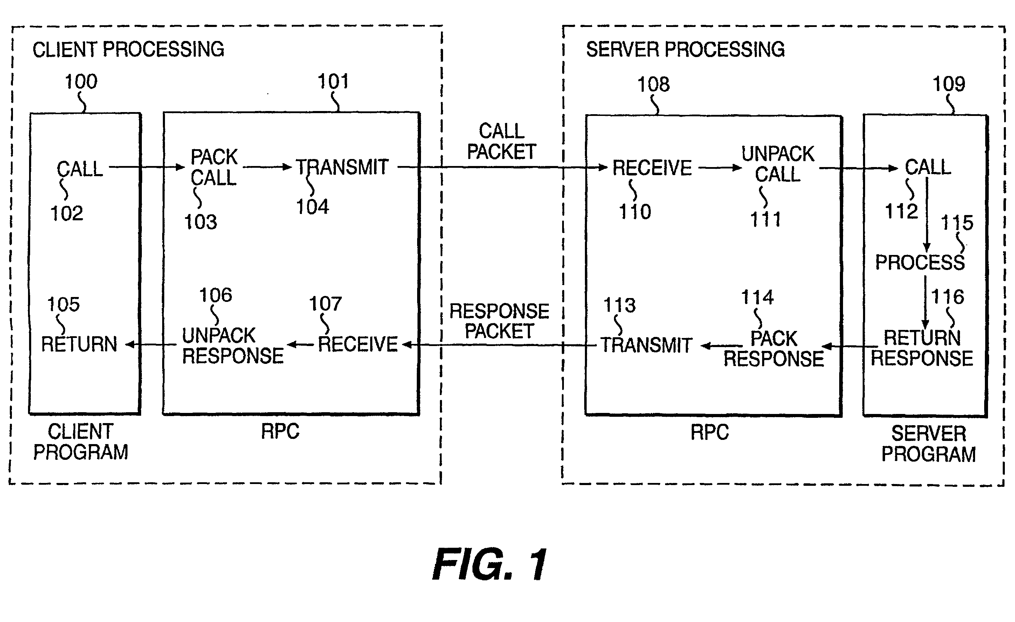

The RPC mechanism is usually implemented in two processing parts using the local procedure call paradigm, one part being on the client side and the other part being on the server side. Both of these parts will be described below with reference to FIG. 1.

FIG. 1 is a diagram illustrating the flow of call information using an RPC mechanism. As shown in FIG. 1, a client program 100 issues a call (step 102). The RPC mechanism 101 then packs the call as arguments of a call packet (step 103), which the RPC mechanism 101 then transmits to a server program 109 (step 104). The call packet also contains information to identify the client program 100 that first sent the call. After the call packet is transmitted (step 104), the RPC mechanism 101 enters a wait state during which it waits for a response from the server program 109.

The RPC mechanism 108 for the server program 109 (which may be the same RPC mechanism as the RPC mechanism 101 when the server program 109 is on the same platform as the client program 100) receives the call packet (step 110), unpacks the arguments of the call from the call packet (step 111), identifies, using the call information, the server program 109 to which the call was addressed, and provides the call arguments to the server program 109.

The server program receives the call (step 112), processes the call by invoking the appropriate procedure (step 115), and returns a response to the RPC mechanism 108 (step 116). The RPC mechanism 108 then packs the response in a response packet (step 114) and transmits it to the client program 100 (step 113).

Receiving the response packet (step 107) triggers the RPC mechanism 101 to exit the wait state and unpack the response from the response packet (step 106). RPC 101 then provides the response to the client program 100 in response to the call (step 105). This is the process flow of the typical RPC mechanism modeled after the local procedure call paradigm. Since the RPC mechanism uses the local procedure call paradigm, the client program 100 is blocked at the call until a response is received. Thus, the client program 100 does not continue with its own processing after sending the call; rather, it waits for a response from the server program 109.

The Java™ programming language is an object-oriented programming language that is typically compiled into a platform-independent format, using a bytecode instruction set, which can be executed on any platform supporting the Java virtual machine (JVM). This language is described, for example, in a text entitled "The Java Language Specification" by James Gosling, Bill Joy, and Guy Steele, Addison-Wesley, 1996.

The JVM is described, for example, in a text entitled "The Java Virtual Machine Specification," by Tim Lindholm and Frank Yellin, Addison Wesley, 1996.

Java and Java-based trademarks are trademarks or registered trademarks of Sun Microsystems, Inc. in the United States and other countries.

Because the JVM may be implemented on any type of platform, implementing distributed programs using the JVM significantly reduces the difficulties associated with developing programs for heterogenous distributed systems. Moreover, the JVM uses a Java remote method invocation (RMI) system that enables communication among programs of the system. RMI is explained in, for example, the following document,

Remote Method Invocation Specification, Sun Microsystems, Inc. (1997), which is available via universal resource locator (URL) http;//www.javasoft.com/products/jdk/1.1/docs/guide/rmi/spec/rmiTOC.doc.html.

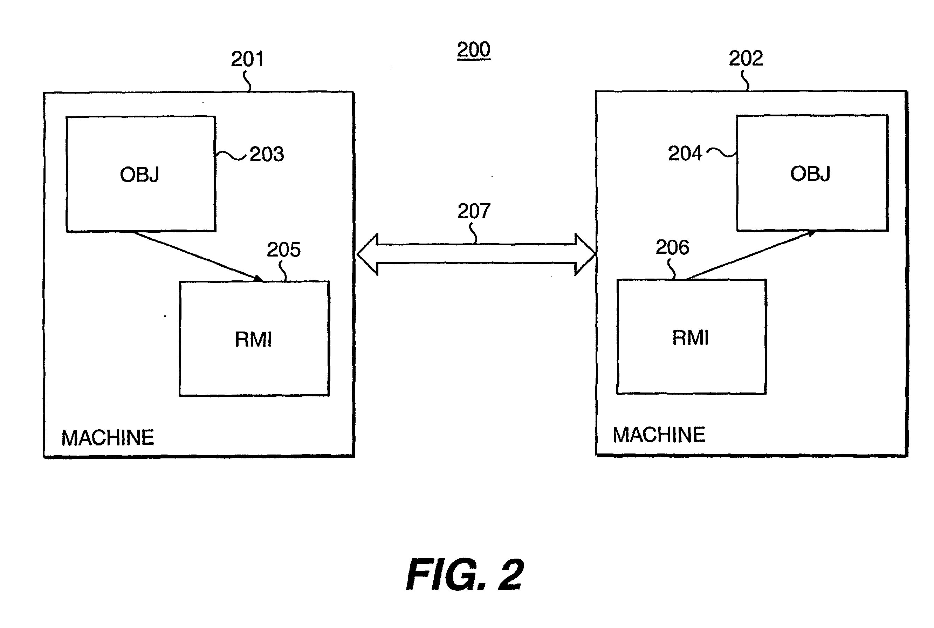

FIG. 2 is a diagram illustrating the flow of objects in an object-oriented distributed system 200 including machines 201 and 202 for transmitting and receiving method invocations using the JVM. In system 200, machine 201 uses RMI 205 for responding to a call for object 203 by converting the object into a byte stream 207 including an identification of the type of object transmitted and data constituting the object. While machine 201 is responding to the call for object 203, a process running on the same or another machine in system 200 may continue operation without waiting for a response to its request.

Machine 202 receives the byte stream 207. Using RMI 206, machine 202 automatically converts it into the corresponding object 204, which is a copy of object 203 and which makes the object available for use by a program executing on machine 202. Machine 202 may also transmit the object to another machine by first converting the object into a byte stream and then sending it to the third machine, which also automatically converts the byte stream into the corresponding object.

The automatic reconstruction of the objects from the byte stream in this manner sometimes requires unnecessary processing. For example, there are times when a call is made that does not require actual or immediate interaction with the object, both of which require conversion of the byte stream to object form. Instead, a call may require passing the object to another call or storing it for later use. In this situation, the reconstruction of the object on an intermediate machine is unnecessary, especially if the object is to be transmitted to another machine. Examples of such a situation include transmission of objects for notification of events in a distributed system. Accordingly, it is desirable to more efficiently transmit objects in a distributed system without the unneeded conversion of a byte stream to an object on intermediate machines that have no use for the object, or the premature conversion of the byte stream before a process on the receiving machine requires access to the object.

### SUMMARY OF THF INVENTION

A method consistent with the present invention specifies an object associated with a request for notification of a particular event within a distributed system. The object is converted into a stream containing a self-describing form of the object, and the stream is provided for selective transmission to a machine where the object is reconstructed by accessing program code identified in the stream upon occurrence of the event.

Another method consistent with the present invention receives at a first machine a stream containing a self-describing form of an object associated with a request for notification of a particular event within a distributed system. The method includes determining whether to send the stream to a second machine and selectively sending the stream to the second machine for reconstruction of the object by accessing program code identified in the stream, the first machine providing notification of the event.

An apparatus consistent with the present invention specifies an object associated with a request for notification of a particular event within a distributed system. The apparatus converts the object into a stream containing a self-describing form of the object and provides the stream for selective transmission to a machine where the object is reconstructed by accessing program code identified in the stream upon occurrence of the event.

Another apparatus consistent with the present invention receives at a first machine a stream containing a self-describing form of an object associated with a request for notification of a particular event within a distributed system. The apparatus determines whether to send the stream to a second machine and selectively sends the stream to the second machine for reconstruction of the object by accessing program code identified in the stream, the first machine providing notification of the event.

### BRIEF DESCRIPTION OF THE DRAWINGS

The accompanying drawings are incorporated in and constitute a part of this specification and, together with the description, explain the advantages and principles of the invention. In the drawings,
FIG. 1 is a diagram illustrating the flow of call information using an RPC mechanism;
FIG. 2 is a diagram illustrating the transmission of objects in an object-oriented distributed system;
FIG. 3 is a diagram of an exemplary distributed processing system that can be used in an implementation consistent with the present invention;
FIG. 4 is a diagram of an exemplary distributed system infrastructure;
FIG. 5 is a diagram of a computer in a distributed system infrastructure shown in FIG. 4;
FIG. 6 is a diagram of a flow of objects within a distributed processing system consistent with the present invention;
FIG. 7 is a flow diagram of steps performed in transmitting objects in a distributed system using loading of remote code for construction of an object in an implementation consistent with the present invention;
FIG. 8 is a flow diagram of steps performed for deferring code loading and construction of objects when transmitting objects in a distributed system consistent with the present invention;
FIG. 9 is a diagram of a distributed network illustrating event notification; and
FIG. 10 is a flow chart of a process for event notification within a distributed network.

### DETAILED DESCRIPTION

### Overview

Systems consistent with the present invention efficiently transfer objects using a variant of an RPC or RMI, passing arguments and return values from one process to another process each of which may be on different machines. In such cases, it is desirable to defer reconstruction of the object and downloading of code associated with such object reconstruction until it is needed by the program. The term "machine" is used in this context to refer to a physical machine or a virtual machine. Multiple virtual machines may exist on the same physical machine. Examples of RPC systems include distributed computed environment (DCE) RPC and Microsoft distributed common object model (DCOM) RPC.

An example of how this is accomplished is by making a self-describing stream a first-class entity in the system, meaning that it exists within a type system of a programming language and can be accessed and manipulated by instructions written in that language. A stream is typically a sequence of characters, such as a bit pattern, capable of transmission, and a self-describing byte stream is a byte stream that contains enough information such that it can be converted back into the corresponding object.

An object called a "marshalled object" comprises the self-describing stream. Such marshalled objects can typically be produced from any object that can be passed from one address space to another, and they can be stored, passed to other objects, or used to reconstruct an object of the original type on demand. The advantage of using marshalled objects is that the reconstruction of an object is deferred until a process having access to the marshalled object directly invokes the creation of the object using the marshalled object. Any downloading of code required to operate on the object is deferred until the marshalled object is used to create a copy of the original object, which was previously used to produce the marshalled object.

Accordingly, in cases where the object is not used, but rather is stored for later retrieval or passed along to another process, RMI does not download the code required for reconstruction of the object. This may result in considerable efficiencies, both in time and in code storage space.

Event notification, for example, may occur through use of a marshalled object. For event notification, a machine registers with a device to receive notification of particular events within a distributed network. The device transmits a request for registration along with a marshalled object to an event generator, which stores the marshalled object for possible later transmission. If the event occurs, the event generator sends notification of the event including the marshalled object to an event listener. The event listener may reconstruct the marshalled object, which may contain information relating to the event. The event listener may be the same as the device requesting notification. Events include, for example, a change in the state or occurrence of an object. More specific examples of events in a distributed system include, but are not limited to, the following: a "click" by a key or cursor-control device; an overlapping window on a display device; a device joining a network; a user logging onto a network; and particular user actions.

### Distributed Processing System

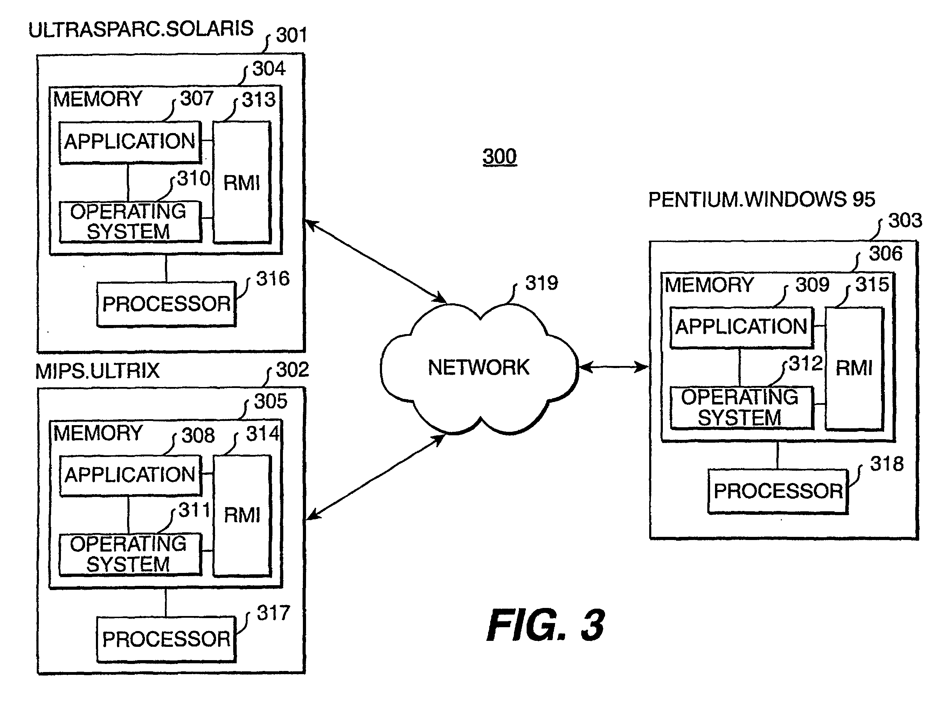

FIG. 3 illustrates an exemplary distributed processing system 300 which can be used in an implementation consistent with the present invention. In FIG. 3, distributed processing system 300 contains three independent and heterogeneous platforms 301, 302, and 303 connected in a network configuration represented by network cloud 319. The composition and protocol of the network configuration represented by cloud 319 is not important as long as it allows for communication of the information between platforms 301, 302 and 303. In addition, the use of just three platforms is merely for illustration and does not limit an implementation consistent with the present invention to the use of a particular number of platforms. Further, the specific network architecture is not crucial to embodiments consistent with this invention. For example, another network architecture that could be used in an implementation consistent with this invention would employ one platform as a network controller to which all the other platforms would be connected.

In the implementation of distributed processing system 300, platforms 301, 302 and 303 each include a processor 316, 317, and 318 respectively, and a memory, 304, 305, and 306, respectively. Included within each memory 304, 305, and 306, are applications 307, 308, and 309, respectively, operating systems 310, 311, and 312, respectively, and RMI components 313, 314, and 315, respectively.

Applications 307, 308, and 309 can be applications or programs that are either previously written and modified to work with, or that are specially written to take advantage of, the services offered by an implementation consistent with the present invention. Applications 307, 308, and 309 invoke operations to be performed in accordance with an implementation consistent with this invention.

Operating systems 310, 311, and 312 are typically standard operating systems tied to the corresponding processors 316, 317, and 318, respectively. The platforms 301, 302, and 303 can be heterogenous. For example, platform 301 has an UltraSparc® microprocessor manufactured by Sun Microsystems, Inc. as processor 316 and uses a Solaris® operating system 310. Platform 302 has a MIPS microprocessor manufactured by Silicon Graphics Corp. as processor 317 and uses a Unix operating system 311. Finally, platform 303 has a Pentium microprocessor manufactured by Intel Corp. as processor 318 and uses a Microsoft Windows 95 operating system 312. An implementation consistent with the present invention is not so limited and could accommodate homogenous platforms as well.

Sun, Sun Microsystems, Solaris, Java, and the Sun Logo are trademarks or registered trademarks of Sun Microsystems, Inc. in the United States and other countries. UltraSparc and all other SPARC trademarks are used under license and are trademarks of SPARC International, Inc. in the United States and other countries. Products bearing SPARC trademarks are based upon an architecture developed by Sun Microsystems, Inc.

Memories 304, 305, and 306 serve several functions, such as general storage for the associated platform. Another function is to store applications 307, 308, and 309, RMI components 313, 314, and 315, and operating systems 310, 311, and 312 during execution by the respective processor 316, 317, and 318. In addition, portions of memories 304, 305, and 306 may constitute shared memory available to all of the platforms 301, 302, and 303 in network 319. Note that RMI components 313, 314, and 315 operate in conjunction with a JVM, which is not shown for the purpose of simplifying the figure.

### Distributed System Infrastructure

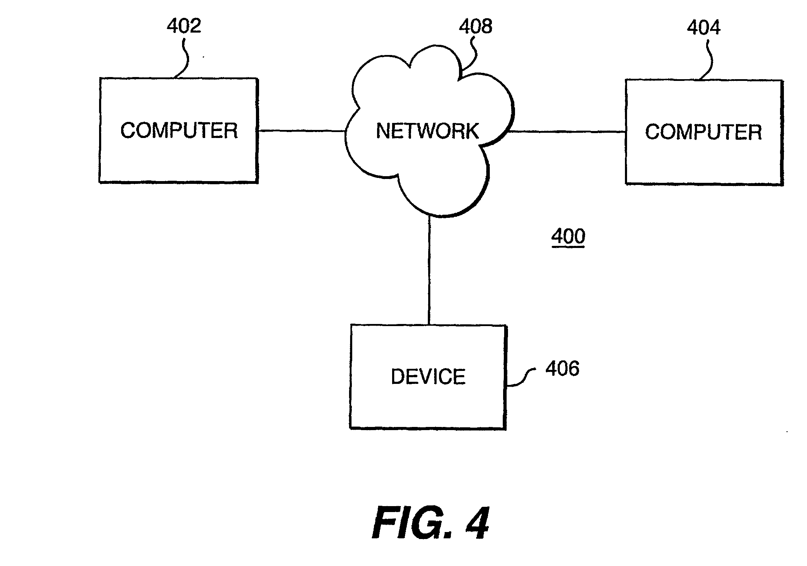

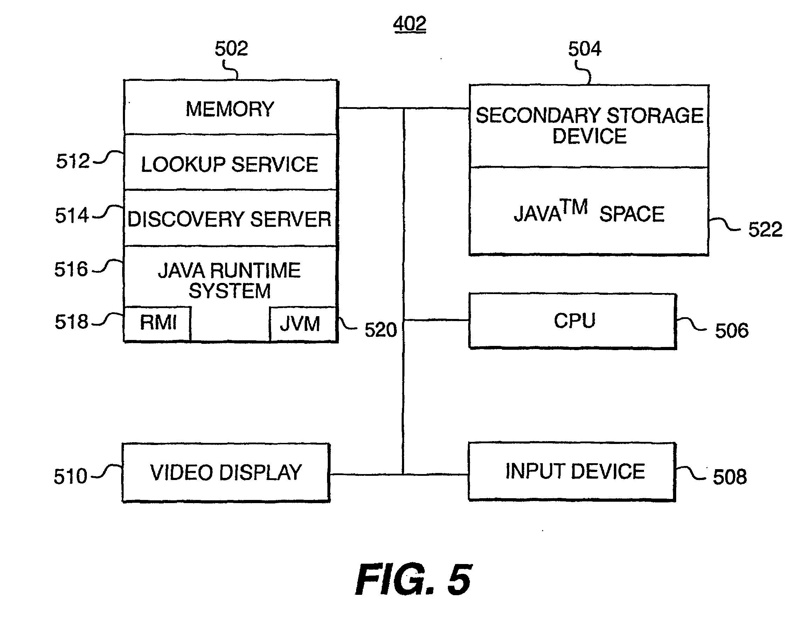

Systems and methods consistent with the present invention may also operate within a particular distributed system 400, which will be described with reference to FIGS. 4 and 5. This distributed system 400 is comprised of various components, including hardware and software, to (1) allow users of the system to share services and resources over a network of many devices; (2) provide programmers with tools and programming patterns that allow development of robust, secured distributed systems; and (3) simplify the task of administering the distributed system. To accomplish these goals, distributed system 400 utilizes the Java programming environment to allow both code and data to be moved from device to device in a seamless manner. Accordingly, distributed system 400 is layered on top of the Java programming environment and exploits the characteristics of this environment, including the security offered by it and the strong typing provided by it.

In distributed system 400 of FIGS. 4 and 5, different computers and devices are federated into what appears to the user to be a single system. By appearing as a single system, distributed system 400 provides the simplicity of access and the power of sharing that can be provided by a single system without giving up the flexibility and personalized response of a personal computer or workstation. Distributed system 400 may contain thousands of devices operated by users who are geographically disperse, but who agree on basic notions of trust, administration, and policy.

Within an exemplary distributed system are various logical groupings of services provided by one or more devices, and each such logical grouping is known as a Djinn. A "service" refers to a resource, data, or functionality that can be accessed by a user, program, device, or another service and that can be computational, storage related, communication related, or related to providing access to another user. Examples of services provided as part of a Djinn include devices, such as printers, displays, and disks; software, such as programs or utilities; information, such as databases and files; and users of the system.

Both users and devices may join a Djinn. When joining a Djinn, the user or device adds zero or more services to the Djinn and may access, subject to security constraints, any one of the services it contains. Thus, devices and users federate into a Djinn to share access to its services. The services of the Djinn appear programmatically as objects of the Java programming environment, which may include other objects, software components written in different programming languages, or hardware devices. A service has an interface defining the operations that can be requested of that service, and the type of the service determines the interfaces that make up that service.

Distributed system 400 is comprised of computer 402, a computer 404, and a device 406 interconnected by a network 408. Device 406 may be any of a number of devices, such as a printer, fax machine, storage device, computer, or other devices. Network 408 may be a local area network, wide area network, or the Internet. Although only two computers and one device are depicted as comprising distributed system 400, one skilled in the art will appreciate that distributed system 400 may include additional computers or devices.

FIG. 5 depicts computer 402 in greater detail to show a number of the software components of distributed system 400. One skilled in the art will appreciate that computer 404 or device 406 may be similarly configured. Computer 402 includes a memory 502, a secondary storage device 504, a central processing unit (CPU) 506, an input device 508, and a video display 510. Memory 502 includes a lookup service 512, a discovery server 514, and a Java runtime system 516. The Java runtime system 516 includes the Java RMI system 518 and a JVM 520. Secondary storage device 504 includes a Java space 522.

As mentioned above, distributed system 400 is based on the Java programming environment and thus makes use of the Java runtime system 516. The Java runtime system 516 includes the Java API libraries, allowing programs running on top of the Java runtime system to access, in a platform-independent manner, various system functions, including windowing capabilities and networking capabilities of the host operating system. Since the Java API libraries provides a single common API across all operating systems to which the Java runtime system is ported, the programs running on top of a Java runtime system run in a platform-independent manner, regardless of the operating system or hardware configuration of the host platform. The Java runtime system 516 is provided as part of the Java software development kit available from Sun Microsystems, Inc. of Mountain View, CA.

JVM 520 also facilitates platform independence. JVM 520 acts like an abstract computing machine, receiving instructions from programs in the form of bytecodes and interpreting these bytecodes by dynamically converting them into a form for execution, such as object code, and executing them. RMI 518 facilitates remote method invocation by allowing objects executing on one computer or device to invoke methods of an object on another computer or device. Both RMI and the JVM are also provided as part of the Java software development kit.

Lookup service 512 defines the services that are available for a particular Djinn. That is, there may be more than one Djinn and, consequently, more than one lookup service within distributed system 400. Lookup service 512 contains one object for each service within the Djinn, and each object contains various methods that facilitate access to the corresponding service. Lookup service 512 is described in U.S. patent application entitled "Method and System for Facilitating Access to a Lookup Service".

Discovery server 514 detects when a new device is added to distributed system 400, during a process known as boot and join (or discovery), and when such a new device is detected, the discovery server passes a reference to lookup service 512 to the new device so that the new device may register its services with the lookup service and become a member of the Djinn. After registration, the new device becomes a member of the Djinn, and as a result, it may access all the services contained in lookup service 512.

A Java space 522 is an object repository used by programs within distributed system 400 to store objects. Programs use a Java space 522 to store objects persistently as well as to make them accessible to other devices within distributed system 400. Java spaces are described in co-pending application FR-A-1057123, entitled "Database System Employing Polymorphic Entry and Entry Matching".

One skilled in the art will appreciate that an exemplary distributed system 400 may contain many lookup services, discovery servers, and Java spaces.

### Data Flow in a Distributed Processing System

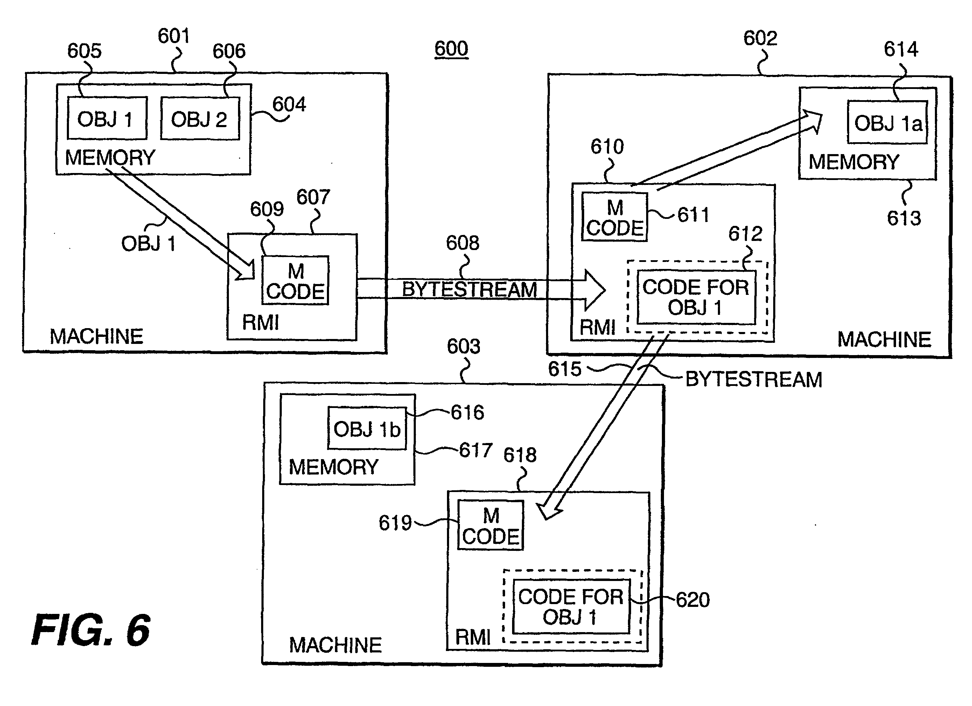

FIG. 6 is a diagram of an object-oriented distributed system 600 connecting machines 601, 602, and 603, such as computers or virtual machines executing on one or more computers, or the machines described with reference to FIG. 3. Transmitting machine 601 includes a memory 604 storing objects such as objects 605 and 606, and RMI 607 for performing processing on the objects. To transmit an object over network 600, RMI 607 uses code 609 for converting object 605 into a marshalled object that is transmitted as a byte stream 608 to machine 602. Streams used in the Java programming language, including input and output streams, are known in the art and an explanation,
appears in, for example, a text entitled "The Java Tutorial: Object-Oriented Programming for the Internet," pp. 325-53, by Mary Campione and Kathy Walrath, Addison-Wesley, 1996.

Part of this conversion includes adding information so that a receiving machine 602 can reconstruct the object. When a set of object types is limited and is the same on all machines 601, 602, and 603, a receiving machine typically requires the object's state and a description of its type because the object's code is already present on all network machines. Alternatively, machine 601 uses RMI.607 to provide more flexibility, allowing code to be moved when necessary along with information or the object's state and type. Additionally, a transmitting machine includes in the marshalled object an identification of the type of object transmitted, the data constituting the state of the object, and a network-accessible location in the form of a URL for code that is associated with the object. URLs are known in the art and an explanation appears in, for example, a text entitled "The Java Tutorial: Object-Oriented Programming for the Internet," pp. 494-507, by Mary Campione and Kathy Walrath, Addison-Wesley, 1996.

When receiving machine 602 receives byte stream 608, it identifies the type of transmitted object. Machine 602 contains its own RMI 610 and code 611 for processing of objects. If byte stream 608 contains a marshalled object, machine 602 may create a new object 614 using the object type identified in the marshalled object, the state information, and code for the object. Object 614 is a copy of object 605 and is stored in memory 613 of machine 602. If code 612 is not resident or available on machine 602 and the marshalled object does not contain the code, RMI 610 uses the URL from the marshalled object to locate the code and transfer a copy of the code to machine 602. Code 612 is generally only required if the object is unmarshalled. Because the code is in bytecode format and is therefore portable, the receiving machine can load the code into RMI 610 to reconstruct the object. Thus, machine 602 can reconstruct an object of the appropriate type even if that kind of object has not been present on the machine before.

Machine 602 may also convert object 614 into byte stream 615 for transmission to a third machine 603, which contains its own RMI 618 and code 619 for processing objects. RMI 618, using code 620 for the object, converts byte stream 615 into a corresponding object 616, which it stores in memory 617. Object 616 is a copy of object 605. If code 620 for the object is not resident or available, machine 603 requests the code from another machine using the URL, as described above.

Machine 602 may alternatively store the marshalled object as a byte stream without reconstructing the object. It may then transmit the byte stream to machine 603.

### Marshalled Object

A marshalled object is a container for an object that allows that object to be passed as a parameter in RMI call, but postpones conversion of the marshalled object at the receiving machine until a program executing on the receiving machine explicitly requests the object via a call to the marshalled object. A container is an envelope that includes the data and either the code or a reference to the code for the object, and that holds the object for transmission. The serializable object contained in the marshalled object is typically serialized and deserialized when requested with the same semantics as parameters passed in RMI calls. Serialization is a process of converting an in-memory representation of an object into a corresponding self-describing byte stream. Deserialization is a process of converting a self-describing byte stream into the corresponding object.

To convert an object into a marshalled object, the object is placed inside a marshalled object container and when a URL is used to locate code for the object, the URL is added to the container. Thus, when the contained object is retrieved from its marshalled object container, if the code for the object is not available locally, the URL added to the container is used to locate and load code in bytecode format for the object's class.

Table 1 provides an exemplary class definition in the Java programming language for a marshalled object consistent with the present invention.

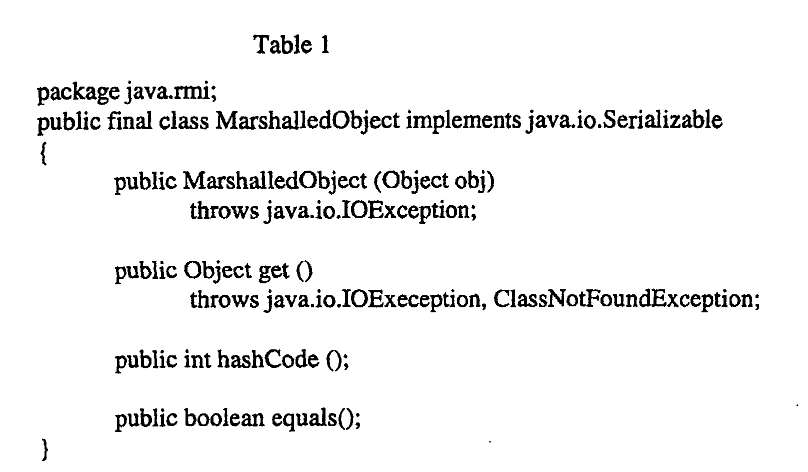

A marshalled object may be embodied within an article of manufacture specifying a representation of the object stored in a computer-readable storage medium.

A marshalled object's constructor takes a serializable object (obj) as its single argument and holds the marshalled representation of the object in a byte stream. The marshalled representation of the object preserves the semantics of objects that are passed in RMI calls: each class in the stream is typically annotated with either the object's code or a URL to the code so that when the object is reconstructed by a call to a "get" method, the bytecodes for each class can be located and loaded, and remote objects are replaced with their proxy stubs. The "get" method is a method called by a program to execute a process of unmarshalling, which is reconstruction of an object from a marshalled object using a self-describing byte stream (the marshalled object), and a process to obtain the necessary code for that process. A proxy stub is a reference to a remote object for use in reconstructing an object.

When an instance of the class marshalled object is written to a "java.io.ObjectOutputStream," the contained object's marshalled form created during construction is written to the stream. Thus, only the byte stream is serialized.

When a marshalled object is read from a "java.io.ObjectInputStream," the contained object is not deserialized into a new object. Rather, the object remains in its marshalled representation until the marshalled object's get method is called.

The "get" method preferably always reconstructs a new copy of the contained object from its marshalled form. The internal representation is deserialized with the same semantics used for unmarshalling parameters for RMI calls. Thus, the deserialization of the object's representation loads class codes, if not available locally, using the URL annotation embedded in the serialized stream for the object.

As indicated in the class definition for a marshalled object, the hash code of the marshalled representation of an object is defined to be equivalent to the hash code for the object itself. In general, a hash code is used in hash tables to perform fast look-ups of information, which is known in the art. The equals method will return true if the marshalled representation of the objects being compared are equivalent. An equals method verifies reconstruction by determining if a reconstructed object is the same as the original object, and such methods are known in the Java programming language.

### Transmission of a Marshalled Object

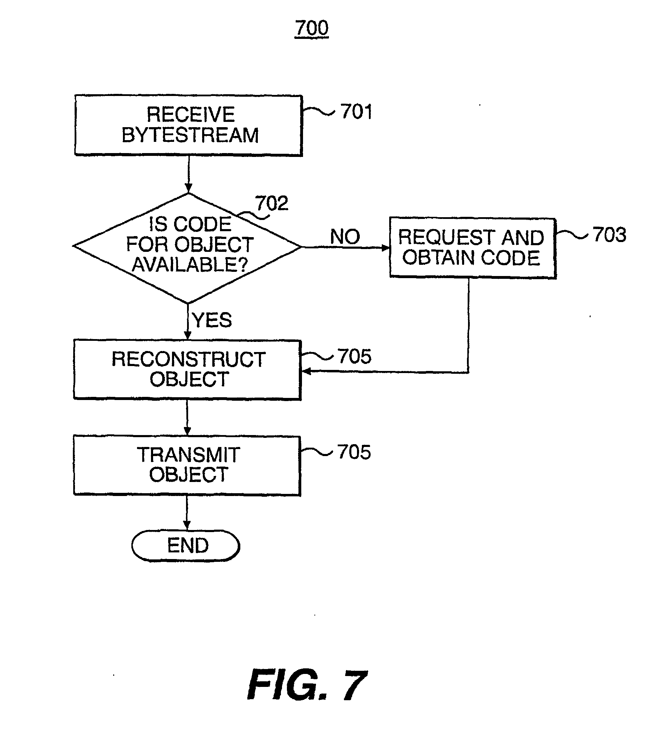

FIG. 7 is a flow diagram of steps 700 preferably performed in transmitting objects in a distributed system consistent with the present invention. A machine receives a byte stream (step 701), which includes data for the object, information identifying the type of object, and optionally a URL for the code that is associated with the object. The receiving machine determines if the code for the object is resident or available (step 702). If it is available, the machine preferably uses RMI for reconstructing the object from the byte stream and resident code (step 704). If the code is not resident, the machine uses the URL from the byte stream to request the code from another machine located at a network accessible location, and that machine returns a copy of the code (step 703). The object can also be transmitted in the form of a byte stream to another machine (step 705).

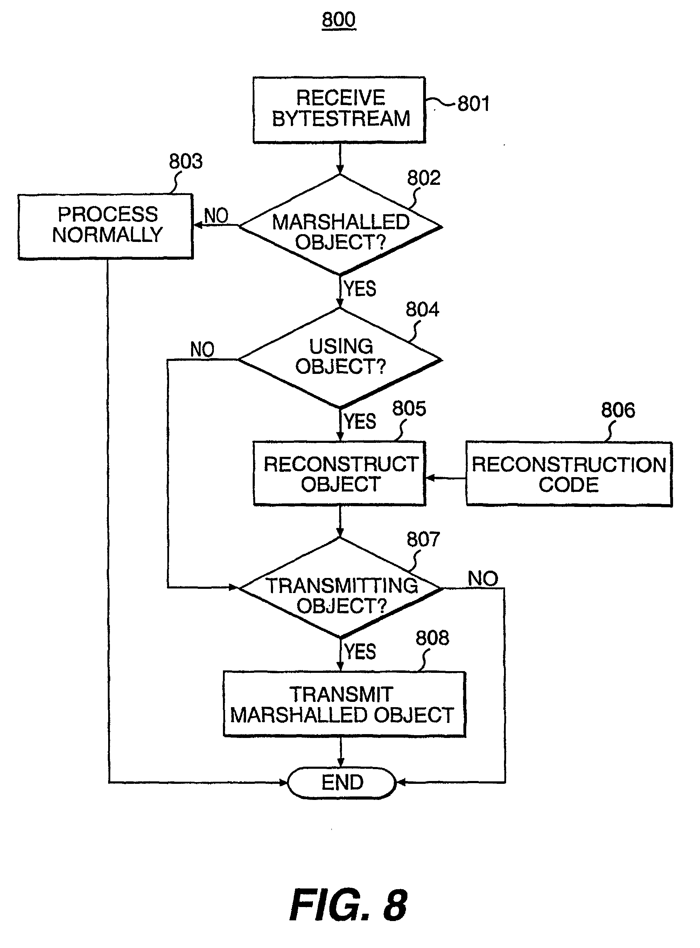

FIG. 8 is a flow diagram of steps 800 preferably performed for deferring code loading and construction of objects when transmitting marshalled objects in a distributed system consistent with the present invention. A machine receives a byte stream (step 801), which includes data for the object, information identifying the type of object, and optionally a URL for the code that is associated with the object.

The machine determines if the byte stream is a marshalled object (step 802). If it is not such an object, the machine performs normal processing of the byte stream (step 803). Otherwise, if the received byte stream represents a marshalled object, the machine holds the marshalled object for later use in response to a get method invoked by a process on the receiving machine. If the receiving machine determines that the object is to be transmitted to another machine (step 804), it simply transmits the byte stream without reconstructing the object. If the machine uses the object, it performs reconstruction of the object using its RMI and associated code (step 805). If the reconstruction code for the object is not resident on the machine, it uses a URL to request and obtain the code (step 806), as described above. The machine determines if it needs to transmit the object to another machine (step 807). If the object is destined for another machine, it is transmitted as a byte stream (step 808).

Accordingly, a marshalled object provides for more efficient transfer of objects in a distributed system. If an object is needed by a machine, it can be reconstructed, and if the machine does not need to use the object, it can transmit the marshalled object without reconstructing it.

### Use of a Marshalled Object in Event Notification

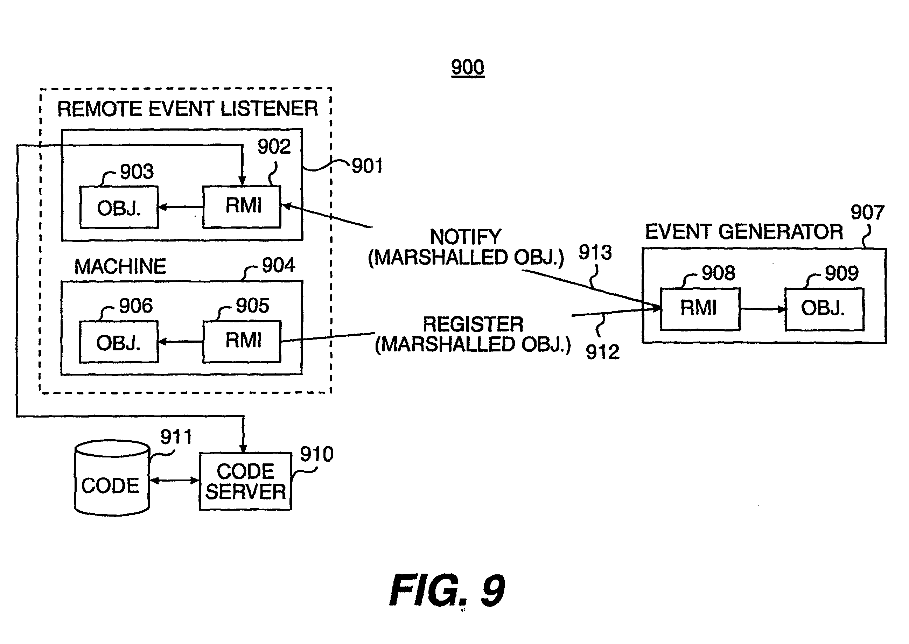

A distributed system or network may use marshalled objects in conjunction with registration for notification of events within the system. FIG. 9 is a diagram of a distributed network 900 illustrating event notification. Network 900 may use the machines described with reference to FIGS. 3, 4, and 5. Network 900 includes a remote event listener 901 having RMI 902 and object 903, a machine 904 having RMI 905 and object 906, and an event generator 907 having RMI 908 and object 909 for providing event notification. Machine 904 may be the same as remote event listener 901, as indicated by the dashed line, or they may be separate machines.

Machine 904, desiring notification of a particular network event, registers with RMI 908 by transmitting a request for event notification including or associated with a marshalled object 912. Event generator 907 stores the marshalled object for possible later transmission. When RMI 908 detects an occurrence of the event, it transmits notification of the event along with the marshalled object 913 to remote event listener 901. Remote event listener 901 may make a call to code server 910 in order to obtain code 911 for reconstructing the marshalled object, which may contain information relating to the event. A code server is an entity and process that has access to code and responds to requests for a particular type or class of object and returns code for that object. A code server may be located within machine 901 or on another machine. Also, the code may be resident on the same platform as the code server or on a separate platform. After registration, remote event listener 901 may provide indications of the particular event when detected.

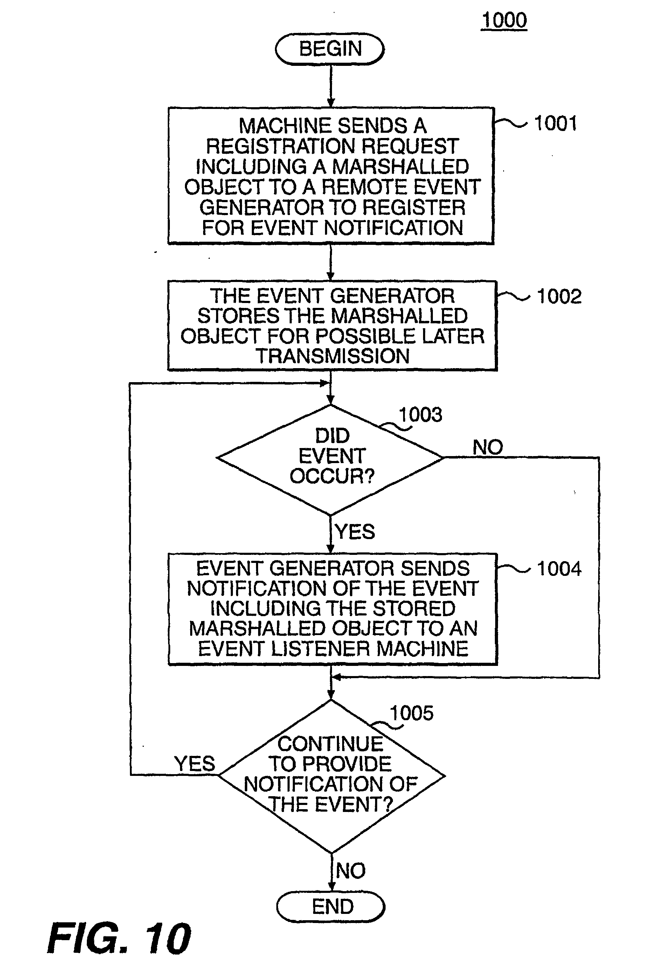

FIG. 10 is a flow chart of a process 1000 or event notification within a distributed network, such as network 900. A machine sends a registration request including a marshalled object to a remote event generator (step 1001), which stores the marshalled object for possible later transmission (step 1002). The event generator determines if the event occurred (step 1003), and, if it detects such an occurrence, it sends notification of the event including the stored marshalled object to an event listener machine (step 1004). The event generator determines, based on particular criteria or system requirements, if it is to continue providing notification of occurrences of the event (step 1005). If so, it continues to determine if the event occurred. These steps may use, for example, interfaces and class definitions written in the Java programming language shown in Tables 1-5 provided in this specification.

Table 2 provides an example of an interface in the Java programming language for implementing a remote event listener.

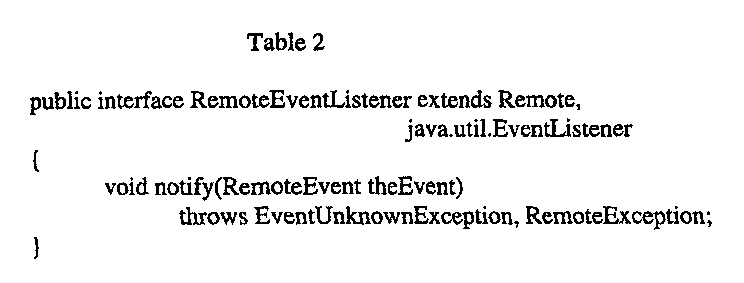

In the interface shown in Table 2, the notify method has a single parameter of type "RemoteEvent" that is used during operation to encapsulate the information passed as part of a notification. Table 3 provides an example of a definition for the public part of the "RemoteEvent" class definition.

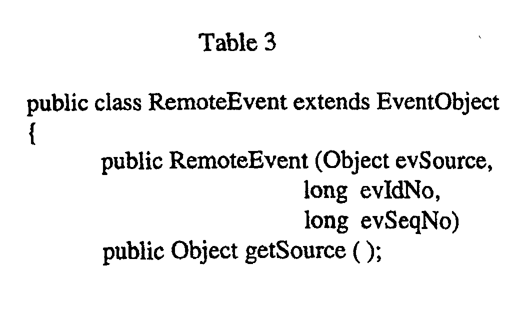

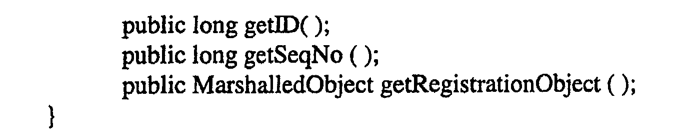

In the definition shown in Table 3, the abstract state contained in a "RemoteEvent" object includes a reference to the object in which the event occurred, a "long" which identifies the kind of event relative to the object in which the event occurred, and a "long" which indicates the sequence number ("SeqNo") of this instance of the event kind. The sequence number obtained from the "RemoteEvent" object is an increasing value that may provide an indication concerning the number of occurrences of this event relative to an earlier sequence number.

Table 4 provides an example of an interface in the Java programming language for an event generator.

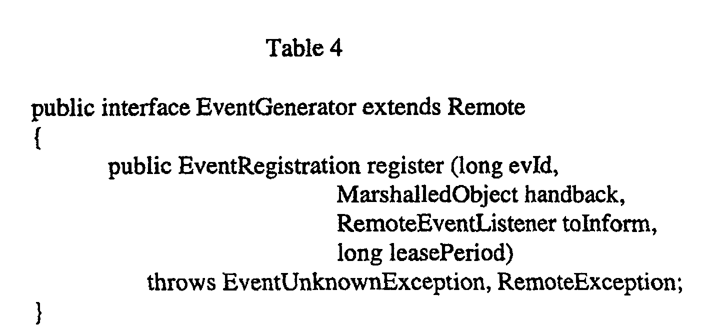

The register method shown in Table 4 allows registration of interest in the occurrence of an event inside an object. While executing this method, a JVM receives an "evId," which is a long integer used to identify the class of events; an object that is transmitted back as part of the notification; a reference to a "RemoteEventListener" object; and a long integer indicating the leasing period for the interest registration. If an "evId" is provided to this call that is not recognized by the event generator object, the JVM signals an error. In the Java programming language, a JVM is said to "throw" an "EventUnknownException" to signal that error. The second argument of the register method is a marshalled object that is to be transmitted back as part of the notification generated when an event of the appropriate type occurs. The third argument of the register method is a remote event listener object that receives any notifications of instances of the event kind occurring. This argument may be the object that is registering interest, or it may be another remote event listener such as a third-party event handler or notification "mailbox." The final argument to the register method is a "long" indicating the requested duration of the registration, referred to as the "lease."

The return value of the register method is an object of the event registration class definition. This object contains a "long" identifying the kind of event in which interest was registered relative to the object granting the registration, a reference to the object granting the registration, and a lease object containing information concerning the lease period.

Table 5 provides an example of a class definition in the Java programming language for event registration.

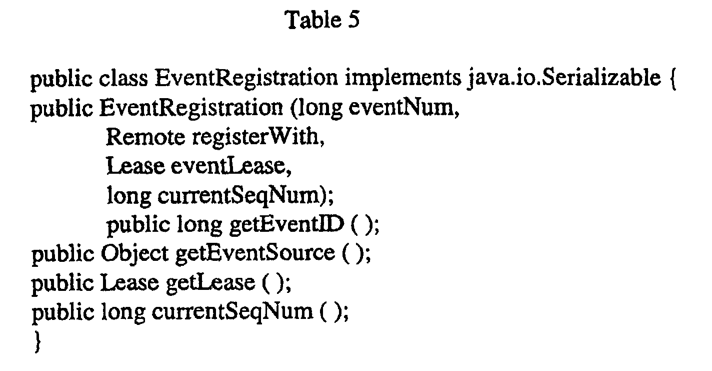

In the class definition shown in Table 5, the "getEventID" method returns the identifier of the event in which interest was registered, which combined with the return value of the "getEventSource" method uniquely identifies the kind of event. This information is provided to third-party repositories to allow them to recognize the event and route it correctly. During operation in a JVM, the "getLease" method returns the lease object for this registration and is used in lease maintenance. The "currentSeqNo" method returns the value of the sequence number on the event kind that was current when the registration was granted, allowing comparison with the sequence number in any subsequent notifications. A "toString" method may be used with this class definition to return a human-readable string containing the information making up the state of the object.

Machines implementing the steps shown in FIGS. 7, 8, and 10 may include computer processors for performing the functions, as shown in FIGS. 3, 4, and 5. They may include modules or programs configured to cause the processors to perform the above functions. They may also include computer program products stored in a memory. The computer program products may include a computer-readable medium or media having computer-readable code embodied therein for causing the machines to perform functions described above. The media may include a computer data signal embodied in a carrier wave and representing sequences of instructions which, when executed by a processor, cause the processor to securely address a peripheral device at an absolute address by performing the method described in this specification. The media may also include data structures for use in performing the method described in this specification.

Although the illustrative embodiments of the systems consistent with the present invention are described with reference to a computer system implementing the Java programming language on the JVM specification, the invention is equally applicable to other computer systems processing code from different programming languages. Specifically, the invention may be implemented with both object-oriented and nonobject-oriented programming systems. In addition, although an embodiment consistent with the present invention has been described as operating in the Java programming environment, one skilled in the art will appreciate that the present invention can be used in other programming environments as well.

While the present invention has been described in connection with an exemplary embodiment, it will be understood that many modifications will be readily apparent to those skilled in the art, and this application is intended to cover any adaptations or variations thereof. For example, different labels or definitions for the marshalled object may be used without departing from the scope of the invention.

## Claims

1. A method of transmitting objects from a first machine (904) in a distributed system (900) comprised of multiple machines (901, 904, 907), the method comprising:
specifying an object (906) associated with a request for notification of a particular event within the system (900);
converting the object (906) into a stream containing a self-describing form of the object; and
providing the stream for selective transmission to a second machine (901) where the object (903) is reconstructed at the second machine (901) by accessing program code identified in the stream upon occurrence of the event.

2. The method of claim 1 wherein the providing step includes storing the stream prior to the selective transmission.

3. The method of claim 1 wherein the converting step includes packaging the object in an unconstructed package including a reference to the program code for reconstructing the object.

4. A method for processing objects in a first machine (907) in a distributed system (900) comprised of multiple machines (901, 904, 907), comprising:
receiving a stream containing a self-describing form of an object associated with a request for notification of a particular event within the system (900);
determining whether to send the stream to a second machine (901);
selectively sending the stream to the second machine (901) for reconstruction of the object (903) by accessing program code identified in the stream; and
providing notification of the event.

5. An apparatus (904) for transmitting objects in a distributed system (900) comprised of multiple machines (901, 904, 907), the apparatus comprising:
means for specifying an object (906) associated with a request for notification of a particular event within the system (900);
converting means for converting the object (906) into a stream containing a self-describing form of the object; and
providing means for providing the stream for selective transmission to a machine (901) where the object (903) is reconstructed by accessing program code identified in the stream upon occurrence of the event.

6. The apparatus of claim 5 wherein the providing means includes means for storing the stream prior to the selective transmission.

7. The apparatus of claim 5 wherein the converting means includes means for packaging the object in an unconstructed package including a reference to the program code for reconstructing the object.

8. An apparatus (907) for processing objects in a distributed system (900) comprised of multiple machines (901, 904, 907), the apparatus comprising:
means for receiving a stream containing a self-describing form of an object associated with a request for notification of a particular event within the system (900);
means for determining whether to send the stream to a machine (901);
means for selectively sending the stream to the machine (901) for reconstruction of the object (903) by accessing program code identified in the stream; and
means for providing notification of the event.

9. A system (900) for transmitting objects in a distributed system comprised of multiple machines (901, 904, 907), comprising:
a first machine (904);
a second machine (901);
a network (408) connecting the first machine (904) with the second machine (901); and
an apparatus according to any one of claims 5 to 7 for transmitting objects in the system.

10. A system (900) for transmitting objects in a distributed system comprised of multiple machines (901, 904, 907), comprising:
a first machine (907);
a second machine (901);
a network connecting the first machine (907) with the second machine (901); and
an apparatus according to claim 8 for transmitting objects in the system.

11. A computer program product, comprising:
a computer-readable medium containing instructions for controlling a computer system to perform the method according to any one of claims 1 to 4.

12. A carrier medium carrying code representing a first object comprising a self-describing code stream, and associated with a second object specifying a request for notification of an event in the system, the first object having a property indicating that the first object is to be maintained as the stream when the first object is transmitted between machines in the system unless occurrence of the event is detected.

13. The carrier medium of claim 12 wherein the code stream includes computer-readable instructions for use in reconstructing the second object.

14. The carrier medium of claim 12 or claim 13 wherein the code stream includes a location of computer-readable instructions for use in reconstructing the second object.

## Patentansprüche

1. Verfahren zum Übertragen von Objekten von einer ersten Maschine (904) in einem verteilten System (900), welches mehrere Maschinen (901, 904, 907) umfasst, wobei das Verfahren die folgenden Schritte umfasst:
Spezifizieren eines Objekts (906), welches zu einer Aufforderung für eine Mitteilung über ein bestimmtes Ereignis innerhalb des Systems (900) gehört;
Umwandeln des Objekts (906) in einen Strom, der eine selbstbeschreibende Form des Objekts enthält; und
Bereitstellen des Stroms für eine selektive Übertragung an eine zweite Maschine (901), wobei das Objekt (903) an der zweiten Maschine (901) durch Zugreifen auf einen Programmcode identifiziert in dem Strom auf ein Auftreten des Ereignisses hin rekonstruiert wird.

2. Verfahren nach Anspruch 1, wobei der Bereitstellungsschritt ein Speichern des Stroms vor der selektiven Übertragung umfasst.

3. Verfahren nach Anspruch 1, wobei der Umwandlungsschritt ein Verpacken des Objekts in ein nicht-konstruiertes Paket einschließlich einer Referenz auf den Programmcode zum Rekonstruieren des Objekts umfasst.

4. Verfahren zum Verarbeiten von Objekten in einer ersten Maschine (901) in einem verteilten System (900), welches mehrere Maschinen (901, 904, 907) umfasst, umfassend die folgenden Schritte:
Empfangen eines Stroms, der eine selbstbeschreibende Form eines Objekts enthält, das zu einer Aufforderung für eine Mitteilung über ein bestimmtes Ereignis innerhalb des Systems (900) gehört;
Bestimmen, ob der Strom an eine zweite Maschine (901) zu senden ist;
Selektives Senden des Stroms an die zweite Maschine (901) für eine Rekonstruktion des Objekts (903) durch Zugreifen auf einen Programmcode, der in dem Strom identifiziert wird; und
Bereitstellen einer Mitteilung über das Ereignis.

5. Vorrichtung (904) zum Übertragen von Objekten in einem verteilten System (900), welches mehrere Maschinen (901, 904, 907) umfasst, wobei die Vorrichtung umfasst:
eine Einrichtung zum Spezifizieren eines Objekts (906), das zu einer Aufforderung für eine Mitteilung über ein bestimmtes Ereignis innerhalb des Systems (900) gehört;
eine Umwandlungseinrichtung zum Umwandeln des Objekts (906) in einen Strom, der eine selbstbeschreibende Form des Objekts enthält; und
eine Bereitstellungseinrichtung zum Bereitstellen des Stroms für eine selektive Übertragung an eine Maschine (901), wobei das Objekt (903) durch Zugreifen auf einen Programmcode, der in dem Strom identifiziert wird, auf das Auftreten des Ereignisses hin rekonstruiert wird.

6. Vorrichtung nach Anspruch 5, wobei die Bereitstellungseinrichtung eine Einrichtung zum Speichern des Stroms vor der selektiven Übertragung umfasst.

7. Vorrichtung nach Anspruch 5, wobei die Umwandlungseinrichtung eine Einrichtung zum Verpacken des Objekts in ein nicht-konstruiertes Paket mit einer Referenz auf den Programmcode zum Rekonstruieren des Objekts umfasst.

8. Vorrichtung (907) zum Verarbeiten von Objekten in einem verteilten System (900), welches mehrere Maschinen (901, 904, 907) umfasst, wobei die Vorrichtung umfasst:
eine Einrichtung zum Empfangen eines Stroms, der eine selbstbeschreibende Form eines Objekts enthält, das zu einer Aufforderung für eine Mitteilung über ein bestimmtes Ereignis innerhalb des Systems (900) gehört;
eine Einrichtung zum Bestimmen, ob der Strom an eine Maschine (901) zu senden ist;
eine Einrichtung zum selektiven Senden des Stroms an die Maschine (901) für eine Rekonstruktion des Objekts (903) durch Zugreifen auf einen Programmcode, der in dem Strom identifiziert wird; und
eine Einrichtung zum Bereitstellen einer Mitteilung über das Ereignis.

9. System (900) zum Übertragen von Objekten in einem verteilten System, das mehrere Maschinen (901, 904, 907) umfasst, umfassend:
eine erste Maschine (904);
eine zweite Maschine (901);
ein Netz (408), das die erste Maschine (904) mit der zweiten Maschine (901) verbindet; und
eine Vorrichtung nach irgendeinem der Ansprüche 5 bis 7 zum Übertragen von Objekten in dem System.

10. System (900) zum Übertragen von Objekten in einem verteilten System, welches mehrere Maschinen (901, 904, 907) umfasst, umfassend:
eine erste Maschine (907);
eine zweite Maschine (901);
ein Netz, das die erste Maschine (907) mit der zweiten Maschine (901) verbindet; und
eine Vorrichtung nach Anspruch 8 zum Übertragen von Objekten in dem System.

11. Computerprogrammprodukt, umfassend:
ein von einem Computer lesbares Medium, welches Befehle zum Steuern eines Computersystems zum Ausführen des Verfahrens nach irgendeinem der Ansprüche 1 bis 4 enthält.

12. Trägermedium, welches einen Code trägt, der ein erstes Objekt darstellt, welches einen selbstbeschreibenden Codestrom umfasst, und zu einem zweiten Objekt gehört, das eine Aufforderung für eine Mitteilung über ein Ereignis in dem System spezifiziert, wobei das erste Objekt eine Eigenschaft aufweist, die anzeigt, dass das erste Objekt als der Strom beibehalten werden soll, wenn das erste Objekt zwischen Maschinen in dem System übertragen wird, außer wenn das Auftreten des Ereignisses erfasst wird.

13. Trägermedium nach Anspruch 12, wobei der Codestrom von einem Computer lesbare Befehle zur Verwendung bei der Rekonstruktion des zweiten Objekts umfasst.

14. Trägermedium nach Anspruch 12 oder Anspruch 13, wobei der Codestrom einen Ort von von einem Computer lesbaren Befehlen zur Verwendung bei der Konstruktion des zweiten Objekts umfasst.

## Revendications

1. Procédé de transmission d'objets depuis une première machine (904) dans un système distribué (900) qui est constitué par de multiples machines (901, 904, 907), le procédé comprenant:
la spécification d'un objet (906) qui est associé à une requête pour la notification d'un événement particulier à l'intérieur du système (900);
la conversion de l'objet (906) selon un train qui contient une forme auto-descriptive de l'objet; et
l'application du train pour une transmission sélective sur une seconde machine (901) au niveau de laquelle l'objet (903) est reconstruit au niveau de la seconde machine (901) en accédant à un code de programme qui est identifié dans le train lors de la survenue de l'événement.

2. Procédé selon la revendication 1, dans lequel l'étape d'application inclut le stockage du train avant la transmission sélective.

3. Procédé selon la revendication 1, dans lequel l'étape de conversion inclut le conditionnement de l'objet selon un module non construit qui inclut une référence au code de programme pour reconstruire l'objet.

4. Procédé pour traiter des objets dans une première machine (907) dans un système distribué (900) qui est constitué par de multiples machines (901, 904, 907), comprenant:
la réception d'un train qui contient une forme auto-descriptive d'un objet qui est associé à une requête pour la notification d'un événement particulier à l'intérieur du système (900);
la détermination de si oui ou non il convient d'envoyer le train à une seconde machine (901);
l'envoi de façon sélective du train à la seconde machine (901) pour la reconstruction de l'objet (903) en accédant à un code de programme qui est identifié dans le train; et
la fourniture d'une notification de l'événement.

5. Appareil (904) pour transmettre des objets dans un système distribué (900) qui est constitué par de multiples machines (901, 904, 907), l'appareil comprenant:
un moyen pour spécifier un objet (906) qui est associé à une requête pour la notification d'un événement particulier à l'intérieur du système (900);
un moyen de conversion pour convertir l'objet (906) selon un train qui contient une forme auto-descriptive de l'objet; et
un moyen d'application pour appliquer le train pour une transmission sélective sur une machine (901), où l'objet (903) est reconstruit en accédant à un code de programme qui est identifié dans le train lors de la survenue de l'événement.

6. Appareil selon la revendication 5, dans lequel le moyen d'application inclut un moyen pour stocker le train avant la transmission sélective.

7. Appareil selon la revendication 5, dans lequel le moyen de conversion inclut un moyen pour conditionner l'objet selon un module non construit incluant une référence au code de programme pour reconstruire l'objet.

8. Appareil (907) pour traiter des objets dans un système distribué (900) qui est constitué par de multiples machines (901, 904, 907), l'appareil comprenant:
un moyen pour recevoir un train qui contient une forme auto-descriptive d'un objet qui est associé à une requête pour la notification d'un événement particulier à l'intérieur du système (900);
un moyen pour déterminer si oui ou non il convient d'envoyer le train sur une machine (901);
un moyen pour envoyer de façon sélective le train sur la machine (901) pour la reconstruction de l'objet (903) en accédant à un code de programme qui est identifié dans le train; et
un moyen pour fournir une notification de l'événement.

9. Système (900) pour transmettre des objets dans un système distribué qui est constitué par de multiples machines (901, 904, 907), comprenant:
une première machine (904);
une seconde machine (901);
un réseau (408) qui connecte la première machine (904) à la seconde machine (901); et
un appareil selon l'une quelconque des revendications 5 à 7 pour transmettre des objets dans le système.

10. Système (900) pour transmettre des objets dans un système distribué qui est constitué par de multiples machines (901, 904, 907), comprenant:
une première machine (907);
une seconde machine (901);
un réseau qui connecte la première machine (907) à la seconde machine (901); et
un appareil selon la revendication 8 pour transmettre des objets dans le système.

11. Produit de programme d'ordinateur comprenant:
un support lisible par ordinateur qui contient des instructions pour commander un système d'ordinateur afin de réaliser le procédé selon l'une quelconque des revendications 1 à 4.

12. Support d'information qui est porteur d'un code qui représente un premier objet comportant un train de code auto-descriptif, et associé à un second objet qui spécifie une requête pour une notification d'un événement dans le système, le premier objet présentant une propriété qui indique que le premier objet peut être maintenu en tant que train lorsque le premier objet est transmis entre des machines dans le système sauf si la survenue de l'événement est détectée.

13. Support d'information selon la revendication 12, dans lequel le train de code inclut des instructions lisibles par ordinateur pour une utilisation lors de la reconstruction du second objet.

14. Support d'information selon la revendication 12 ou 13, dans lequel le train de code inclut une localisation d'instructions lisibles par ordinateur pour une utilisation lors de la reconstruction du second objet.
